Europäisches Patentamt

(19) European Patent Office

Office européen des brevets

(11) Veröffentlichungsnummer: **0 249 869 B1**

# (12) EUROPÄISCHE PATENTSCHRIFT

(45) Veröffentlichungstag der Patentschrift:
05.06.91 Patentblatt 91/23

(51) Int. Cl.$^5$: **C08F 10/00**, C08F 4/649

(21) Anmeldenummer: **87108375.4**

(22) Anmeldetag: **10.06.87**

(54) **Verfahren zur Herstellung eines Polyolefins.**

Die Akte enthält technische Angaben, die nach dem Eingang der Anmeldung eingereicht wurden und die nicht in dieser Patentschrift enthalten sind.

(30) Priorität: **14.06.86 DE 3620060**

(43) Veröffentlichungstag der Anmeldung:
**23.12.87 Patentblatt 87/52**

(45) Bekanntmachung des Hinweises auf die Patenterteilung:
**05.06.91 Patentblatt 91/23**

(84) Benannte Vertragsstaaten:
**BE DE ES FR GB IT NL SE**

(56) Entgegenhaltungen:
**EP-A- 0 099 284**
**GB-A- 2 047 255**
**Römps Chemie Lexicon, 7 Auflage s.2881**
**Organikum 7Auflage, 1967, s. 167-168**

(73) Patentinhaber: **HOECHST AKTIENGESELLSCHAFT**
**Postfach 80 03 20**
**W-6230 Frankfurt am Main 80 (DE)**

(72) Erfinder: **Thum, Gerhard, Dr.**
**Ginsterweg 10**
**W-6238 Hofheim am Taunus (DE)**

**Beschreibung**

Die vorliegende Erfindung betrifft ein Verfahren zur Herstellung eines Polyolefins mittels eines hochaktiven, kugelförmigen Ziegler-Katalysators, mit welchem erhebliche Vereinfachungen und Vorteile bei der Handhabung und Verarbeitung der Produkte erzielt werden.

Es sind bereits eine Vielzahl von Katalysatoren des Ziegler-Typs zur Polymerisation von alpha-Olefinen bekannt. Viele dieser Katalysatoren basieren auf Magnesiumchlorid als Trägermaterial, das durch Umsetzung einer magnesiumorganischen Verbindung $R_2Mg$, wie z.B. Butylethylmagnesium, mit einer Chlorkohlenwasserstoffverbindung $R'$-Cl, wie z.B. Tetrachlorkohlenstoff, erhalten wird (vgl. US-PS 4 442 225, US-PS 4 439 539, DE-OS 30 10 202).

Dabei ist es jedoch nicht möglich, ein Magnesiumchlorid mit kugelförmiger Gestalt zu erhalten.

EP-A-99284 beschreibt ein Verfahren zur Herstellung von kugelförmigen Katalysatorträgermaterialien auf Magnesiumchloridbasis, bei dem zunächst eine magnesiumorganische Verbindung mit einer aluminiumorganischen Verbindung umgesetzt wird. Die gebildete Zwischenstufe wird dann mit einer Elektronendonorverbindung, wie Diisoamylether, behandelt, und abschließend erfolgt eine Umsetzung mit einer chlororganischen Verbindung $R'$-Cl.

Einschränkend gilt hierbei, daß $R'$ ein Kohlenwasserstoffrest mit drei oder mehr C-Atomen sein muß und das dem Chlor benachbarte Kohlenstoffatom entweder ein sekundäres oder tertiäres C-Atom sein muß. Angaben über die Wirksamkeit der unter Verwendung dieses Trägermaterials hergestellten Katalysatoren sind in EP-A-99284 nicht enthalten.

Weiterhin ist bekannt, daß durch Umsetzung von Magnesiumchlorid mit Alkoxyverbindungen der Elemente der I. bis VI. Haupt- und/oder Nebengruppe des Periodensystems und nachfolgender Behandlung mit einer Verbindung des Titans, Zirkons oder Vanadiums Katalysatoren hergestellt werden können (vgl. DE-OS 30 25 759). Diese besitzen jedoch neben einer geringen Kontakt-Aktivität (< 5 kg Polymer/mMol Ti) keine kugelförmige Gestalt des Katalysatorkorns. Weiterhin liefern diese Katalysatoren nur Produkte mit einer breiten Molekulargewichtsverteilung, welche für bestimmte Anwendungen, wie z.B. Präzisionsspritzguß oder das Blasformen spezieller Hohlkörper, ungeeignet sind.

Schließlich kann in einem sehr aufwendigen Herstellungsprozeß ein Katalysator mit rundem Korn auf Basis Magnesiumchlorid erhalten werden. Dazu ist eine zweistufige Reduktionsreaktion mit Alkylaluminiumhalogeniden und metallorganischen Verbindungen des Magnesiums, des Zinks oder des Aluminiums mit anschließender Pre-Polymerisation in wiederum ein oder zwei Stufen notwendig (vgl. EP-OS 143002). Dennoch kann dieser Katalysator lediglich bei der Gasphasencopolymerisation von Ethylen mit höheren alpha-Olefinen eingesetzt werden. Nachteilig ist ferner bei den erhaltenen Copolymerisaten der hohe Resttitangehalt im Polymeren, die niedrige Dichte und die breite Korngrößenverteilung des Polymeren.

Es wurde nun gefunden, daß ein hochaktiver und zugleich kugelförmiger Katalysator auf einfache Art und Weise herzustellen ist, mit welchem kugelförmige Polymerisate von alpha-Olefinen erhalten werden können, die sich durch eine enge Korngrößenverteilung bei gleichzeitig großem mittleren Korndurchmesser auszeichnen.

Die Erfindung betrifft somit ein Verfahren zur Herstellung eines Polyolefins durch Polymerisation von alpha-Olefinen bei einer Temperatur von 50 bis 150°C und einem Druck von 1 bis 40 bar in Gegenwart eines Katalysators bestehend aus einer Übergangsmetallkomponente (Komponente A) und einer metallorganischen Verbindung (Komponente B), dessen Komponente A entstanden ist durch Umsetzung einer magnesiumorganischen Verbindung mit einer aluminiumorganischen Verbindung, einem Elektronendonator, einer organischen Chlorverbindung und einer Übergangsmetallverbindung, dadurch gekennzeichnet, daß die Polymerisation durchgeführt wird in Gegenwart eines Katalysators, dessen Komponente A hergestellt wurde durch

a) Umsetzung einer magnesiumorganischen Verbindung der Formel $R^1MgR^2$, worin $R^1$ und $R^2$ gleiche oder verschiedene Alkylreste mit 2 bis 12 Kohlenstoffatomen sind, mit einer aluminiumorganischen Verbindung der Formel $AlR^3{}_n(OR^4)_{3-n}$, worin $R^3$ und $R^4$ gleiche oder verschiedene Alkylreste mit 1 bis 8 Kohlenstoffatomen sind und n 0, 1, 2 oder 3 bedeutet, oder dem Umsetzungsprodukt von Aluminiumtrialkylen oder Aluminiumdialkylhydriden mit 4 bis 20 Kohlenstoffatome enthaltenden Diolefinen, und einem aliphatischen primären Chlorkohlenwasserstoff in einer Menge von 0,01 bis 15 Mol der aluminiumorganischen Verbindung und 0,5 bis 2,5 Mol des Chlorkohlenwasserstoffs, bezogen auf 1 Mol der magnesiumorganischen Verbindung, bei einer Temperatur von 30 bis 110°C,

b) Behandlung des erhaltenen Feststoffs mit einem Elektronendonator in einer Menge von 0,1 bis 1 Mol pro Grammatom des im Feststoff enthaltenen Magnesiums bei einer Temperatur von 0 bis 100°C, und

c) Umsetzung des so erhaltenen Trägermaterials mit einer Verbindung des Titans oder Zirkoniums der Formel $MeX_m(OR^5)_{4-m}$, worin Me Ti oder Zr ist, $R^5$ ein Alkylrest mit 2 bis 10 Kohlenstoffatomen ist, X ein Halogenatom ist und m eine ganze Zahl von 0 bis 4 ist, in einer Menge von 0,1 bis 2 Mol pro Grammatom des

2

im Trägermaterial enthaltenen Magnesium bei einer Temperatur von 30 bis 120°C.

Zunächst wird ein kugelförmiger Feststoff gebildet. Dazu wird eine magnesiumorganische Verbindung mit einer aluminiumorganischen Verbindung und einem aliphatischen primären Chlorkohlenwasserstoff umgesetzt.

Die magnesiumorganische Verbindung ist ein Magnesiumdialkyl der Formel $R^1MgR^2$, wobei $R^1$ und $R^2$ gleiche oder verschiedene Alkylreste mit 2 bis 12 Kohlenstoffatomen sind.

Bevorzugt werden Di-n-butylmagnesium, Di-n-octylmagnesium, n-Butyl-n-octylmagnesium, n-Butyl-ethylmagnesium, n-Butyl-sec-butylmagnesium oder Gemische dieser Verbindungen.

Als aluminiumorganische Verbingung ist geeignet eine Alkyl- oder Alkoxyaluminiumverbindung der Formel $AlR^3_n(OR^4)_{3-n}$, worin $R^3$ und $R^4$ gleiche oder verschiedene Alkylreste mit 1 bis 8 C-Atomen sind und n 0, 1, 2 oder 3 bedeutet. Ebenso geeignet ist auch das Umsetzungsprodukt von Aluminiumtrialkylen oder Aluminiumdialkylhydriden mit Kohlenwasserstoffresten mit 1 bis 6 C-Atome enthaltenden Diolefinen, vorzugsweise Isopren. Beispielsweise sei Aluminiumisoprenyl genannt.

Als aliphatischer primärer Chlorkohlenwasserstoff geeignet ist beispielsweise Tetrachlorkohlenstoff, Chloroform, Methylenchlorid, 1-Chlorpropan oder 1,1,1-Trichlorethan, wobei auch Gemische eingesetzt werden können. Bevorzugt verwendet werden Chloroform und 1-Chlorpropan.

Zur Darstellung des kugelförmigen Feststoffs werden z.B. die magnesiumorganische und die aluminiumorganische Verbindung in einem inerten, flüssigen Kohlenwasserstoff unter Stickstoff- oder Argonatmosphäre gelöst. Diese Lösung wird unter gleichmäßigem Rühren bei einer Temperatur von 30 bis 110°C, bevorzugt von 40 bis 80°C, mit einer Lösung des Chlorkohlenwasserstoffes zusammengebracht. Die Umsetzung kann in der Weise durchgeführt werden, daß man den Chlorkohlenwasserstoff zu der Lösung der magnesium- und aluminiumorganischen Verbindung in dem flüssigen Kohlenwasserstoff gibt, oder umgekehrt.

Bei dieser Umsetzung kann sowohl die Reaktionszeit als auch der Verdünnungsgrad der Reaktanten in weiten Grenzen variiert werden. Die Reaktionszeit beträgt 30 min bis zu mehreren Stunden, vorzugsweise 1 Stunde bis 5 Stunden. Die Reaktanten werden als 0,5 bis zu 15 molare Lösungen eingesetzt.

Der Ansatz enthält bis zu 0,15 Mol, bevorzugt bis zu 0,10 Mol, der aluminiumorganischen Verbindung und 0,5 bis 2,5 Mol, bevorzugt bis zu 2,0 Mol, des Chlorkohlenwasserstoffs, bezogen auf ein Mol magnesiumorganische Verbindung.

Der entstehende Feststoff besteht im wesentlichen aus Magnesiumchlorid mit wenig Aluminiumchlorid. Er wird bevorzugt vor der weiteren Umsetzung mehrmals mit einem flüssigen Kohlenwasserstoff gewaschen.

Der Feststoff besteht aus kugelförmigen Teilchen, die einen mittleren Durchmesser von 20 bis 110 µm, bevorzugt von 60 bis 90 µm, aufweisen. Das Verhältnis des mittleren Durchmessers in Masse, $D_m$, zu mittlerem Durchmesser in Zahl, $D_n$, ist kleiner als 1,5, vorzugsweise liegt es zwischen 1,01 und 1,15. Das Verhältnis größter zu kleiner Durchmesser D/d liegt im Bereich von 1,05 bis 1,15.

Der kugelförmige Feststoff wird z.B. nun in einem flüssigen Kohlenwasserstoff suspendiert, wobei die Konzentration für die weitere Umsetzung nicht enscheidend ist. Bevorzugt wird jedoch eine möglichst konzentrierte und gleichzeitig gut rührfähige Suspension, die 0,1 bis 1,5, bevorzugt 0,3 bis 0,9 Mol Magnesiumchlorid pro Liter flüssigen Kohlenwasserstoff enthält, verwendet.

Zu der Suspension des kugelförmigen Feststoffes gibt man nun einen Elektronendonator. Geeignete Elektronendonatoren sind sauerstoffhaltige Verbindungen des Aluminiums, des Siliciums, des Phosphors oder des Schwefels, Stickstoffs oder Siliciumverbindungen mit Alkyl- oder Arylresten mit 1 bis 8 Kohlenstoffatomen, wie z.B. Triethylamin oder Hexamethyldisilan, oder aliphatische oder aromatische Ether mit gleichen oder unterschiedlichen organischen Resten.

Bevorzugt werden verwendet Alkoxyaluminium-Verbindungen, Dialkylsulfite, aliphatische Ether und Kieselsäurealkylester.

Der Elektronendonator wird im Molverhältnis 0,1 bis 1, bevorzugt 0,1 bis 0,6, bezogen auf ein Grammatom Magnesium bei einer Temperatur von 0 bis 100°C, bevorzugt von 30 bis 80°C, zu dem kugelförmigen Feststoff gegeben.

Die Reaktionszeit beträgt in Abhängigkeit von der Reaktivität der Reaktanten 0,5 bis 5 Stunden, vorzugsweise 1 bis 3 Stunden.

Das auf diese Weise erhaltene kugelförmige Trägermaterial wird entweder mehrmals mit einem inerten flüssigen Kohlenwasserstoff bei 0 bis 100°C, bevorzugt bei 20 bis 60°C, gewaschen oder sofort unter Stickstoff- oder Argonmosphäre umgesetzt mit einer Verbindung des Titans oder Zirkoniums der Formel $MeX_m(OR^5)_{4-m}$, worin Me Ti oder Zr ist, $R^5$ ein Alkylrest mit 2 bis 10 Kohlenstoffatomen ist, X ein Halogenatom, bevorzugt Chlor ist, und m eine ganze Zahl von 0 bis 4, bevorzugt aber 2 oder 4 ist. Man kann ein Gemisch aus mehreren dieser Verbindungen einsetzen.

Bevorzugte Verbindungen sind z.B. $TiCl_4$, $TiCl_3(OEt)$, $TiCl_3(O-iPr)$, $TiCl_2(OEt)_2$, $TiCl_2(O-iPr)_2$, $TiCl_2(O-CH_2C_6H_5)_2$ $TiCl(O-iBu)_3$, $Ti(OEt)_4$, $Ti(O-Pr)_4$ oder $Ti(O-iPr)_4$.

3

Ganz besonders bevorzugt ist $TiCl_4$, $TiCl_2(OEt)_2$ und $Ti(OEt)_4$ oder ein Gemisch dieser Verbindungen.

In der vorstehend beschriebenen Reaktion wird die Verbindung des Titans oder Zirkoniums in einer Menge von 0,1 bis 2 Mol, bevorzugt 0,2 bis 1,8 Mol, bezogen auf ein Grammatom Magnesium des kugelförmigen Trägermaterials, eingesetzt.

Die Reaktionstemperatur beträgt 30 bis 120°C, bevorzugt 60 und 95°C, und die Reaktionszeit beträgt in Abhängigkeit von der geforderten Titan- bzw. Zirkonbelegung 30 min bis zu mehreren Stunden, bevorzugt 1 bis 5 Stunden.

Die auf diese Weise hergestellte Katalysatorkomponente A wird abschließend bei einer Temperatur von 0 bis 100°C, bevorzugt von 10 bis 50°C, durch wiederholtes Waschen mit einem inerten Kohlenwasserstoff von löslichen Verunreinigungen, wie Metall- oder Halogenverbindungen befreit.

Die erfindungsgemäß hergestellte Katalysatorkomponente A liegt in Form von kugelförmigen Teilchen vor, deren mittlerer Durchmesser 20 bis 110 µm, bevorzugt 60 bis 90 µm, beträgt und die ein Verhältnis von mittlerem Durchmesser in Masse, $D_m$, zu mittlerem Durchmesser in Zahl, $D_n$, von kleiner 1,5, vorzugsweise 1,01 bis 1,2 aufweisen. Das Verhältnis D/d liegt im Bereich von 1,02 bis 1,12.

Die Komponente A wird in Form einer Suspension in einem inerten Kohlenwasserstoff, oder aber nach Abtrennen des Suspensionsmittels trocken zur Polymerisation von alpha-Olefinen eingesetzt. Bevorzugt ist die Polymerisation von Ethylen oder Propylen oder die Copolymerisation von Ethylen und/oder Propylen mit einem alpha-Olefin mit 4 bis 10 Kohlenstoffatomen und einer oder mehreren Doppelbindungen, wie z.B. 1-Buten, Isobuten, 1-Hexen oder 1,3-Butadien.

Die Polymerisation kann sowohl kontinuierlich als auch diskontinuierlich in der Gasphase oder in gesättigten Kohlenwasserstoffen mit 3 bis 15 Kohlenstoffatomen, wie z.B. Propan, Butanen, Pentanen, Hexanen, Heptanen, Cyclohexanen oder Gemischen derartiger Verbindungen, durchgeführt werden.

Im allgemeinen wird zusätzlich noch Wasserstoff als Molekulargewichtsregeler und als Komponente B (Cokatalysator) eine Aluminiumverbindung der Formel $AlR^6_pY_{3-p}$, worin p 1, 2 oder 3 und $R^6$ ein Alkyl- oder Arylrest mit 1 bis 20 Kohlenstoffatomen, Y Wasserstoff, ein Halogenatom oder eine ne Alkoxy- oder Aryloxygruppe mit jeweils 1 bis 20 Kohlenstoffatomen ist, eingesetzt.

Beispiele sind halogenhaltige aluminiumorganische Verbindungen, wie Dialkylaluminiumhalogenide, Alkylaluminiumdihalogenide oder Alkylaluminiumsesquichloride, weiterhin Aluminiumtrialkyle oder Aluminiumalkylhydride, die allein oder im Gemisch eingesetzt werden können.

Bevorzugt werden verwendet Aluminiumtrialkyle, wie z.B. Aluminiumtriethyl oder Aluminiumtriisobutyl.

Die Polymerisationstemperatur beträgt 50 bis 150°C, bevorzugt 50 bis 100°C, und der Druck 1 bis 40 bar, vorzugsweise 3 bis 12 bar.

Die in dem erfindungsgemäßen Verfahren hergestellten Polymerisate und Copolymerisate zeichnen sich durch eine kompakte, gleichmäßige kugelförmige Gestalt mit einer sehr engen Korngrößenverteilung aus. Das Verhältnis von mittlerem Durchmesser in Masse, $D_m$, zu mittlerem Druchmesser in Zahl, $D_n$ ist kleiner 1,5, vorzugsweise von 1,02 bis 1,3. Das Verhältnis D/d liegt im Bereich von 1,05 bis 1,2. Der Durchmesser des Polymerkorns liegt im Bereich von 100 bis 1800 µm, vorzugsweise 600 bis 1500 µm. Die Polymeren besitzen eine hohe Schüttdichte und eine ausgezeichnete Verarbeitbarkeit.

Ein weiterer Vorteil des erfindungsgemäßen Katalysators liegt in der hohen Kontaktaktivität, so daß nur sehr geringe Mengen des Katalysators für die Polymerisation notwendig sind. Dadurch müssen die Polymerisate auch keiner zusätzlichen Nachbehandlung, wie z.B. aufwendigen Wasch- oder Reinigungsoperationen, unterworfen werden. Weiterhin treten keine unerwünschten Verfärbungen des Produktes durch Katalysatorreste auf, die häufig zu einer Beeinträchtigung der Lichtstabilität der Polymeren führen können.

Der Restgehalt an Titan bzw. Zirkonium in den erfindungsgemäß hergestellten Polymeren beträgt weniger als 4 ppm, häufig weniger als 2 ppm.

Vor allem aber werden durch die kugelförmige Gestalt und die damit verbundene sehr gute Rieselfähigkeit der Polymerisate und Copolymerisate erhebliche Vereinfachungen und Vorteile bei der Handhabung, Trocknung und Verarbeitung erzielt.

Die Erfindung wird nachfolgend durch die Beispiele näher erläutert.

Der Schmelzindex MFI (190/5) wurde nach DIN 53735 bei 190°C und bei einer Belastung von 5 kp bestimmt.

Das Verhältnis $D_m$ zu $D_n$ wurde nach NF X 11-630 vom Juni 1981 bestimmt:

$D_m$= [Σ ni (Di)³ Di]/[Σ ni (Di)³]
$D_n$= [Σ ni Di]/Σ ni
ni= Anzahl i der Proben gleichen Durchmessers
Di= Durchmesser der i-ten Probe

EP 0 249 869 B1

Die Korngrößenverteilung $D_m/D_n$ der Komponente A wurde mittels Bildanalyse mit einem IBAS 1 ermittelt. Die Korngrößenverteilung $D_m/D_n$ Polymerisates wurde mittels Siebanalyse nach DIN 4188 ermittelt.

## Beispiel 1

200 ml einer Lösung von Di-n-butyl-magnesium in Heptan (entspricht 105 Milligrammatom Mg) wurden mit 10,5 mMol Aluminiumtriethyl versetzt und das Gemisch wurde unter intensivem Rühren innerhalb von 90 min bei 45 +/− 10°C zu einer Mischung aus 165 mMol 1-Chlorpropan und 30 ml Benzin getropft. Der Ansatz wurde weitere drei Stunden bei 80°C gerührt und der Feststoff 5 mal mit insgesamt 1200 ml Benzin ausgewaschen.
Man erhielt einen kugelförmigen Feststoff mit einem mittleren Durchmesser ($d_{50}$) von 60 μm.
Mg : Cl : Al = 1 : 2,14 : 0,04
$D_m/D_n$ = 1,13, D/d= 1,1

## Beispiel 2

200 ml einer Lösung von Butyl-octyl-magnesium in Heptan (entspricht 185 Milligrammatom Mg) wurden zunächst mit 8,5 mMol Aluminium-tri-iso-propylat versetzt und 40 min bei 50°C gerührt. Anschließend wurden innerhalb von 75 min bei 70 +/− 5°C 370 mMol Chloroform zugetropft, der Ansatz zwei Stunden bei 85°C gerührt und der kugelförmige Feststoff mit 800 ml Benzin gewaschen.
Mg : Cl : Al = 1 : 2,2 : 0,06
$d_{50}$ = 80 μm

## Beispiel 3

670 ml einer Lösung von Butyl-octyl-magnesium in Heptan (entspricht 570 Milligrammatom Mg), die 28,5 mMol Aluminiumtriisobutyl enthielten, wurden unter gleichmäßigem Rühren innerhalb von drei Stunden bei 70 +/− 5°C zu einer Mischung aus 200 ml Benzin 100/200 und 70 ml (860 mMol) Chloroform getropft. Die braune Suspension wurde weitere drei Stunden bei 75°C gerührt und der Feststoff 5 mal mit insgesamt 2500 ml Benzin gewaschen.
Mg : Cl : Al = 1 : 2,05 : 0,03
$D_m/D_n$ = 1,09
$d_{50}$ = 90 μm

## Beispiel 4

Man verfuhr analog Beispiel 3, jedoch wurden anstelle von Chloroform 650 mMol Tetrachlorkohlenstoff verwendet.
Mg : Cl : Al = 1 : 2,29 : 0,05
$D_m/D_n$ = 1,14
$d_{50}$ = 70 μm

## Beispiel 5

Zu einem Gemisch aus 60 ml Benzin und 30 ml (370 mMol) Chloroform wurden bei 75°C innerhalb von 60 min 200 ml Butyl-octyl-magnesium in Heptan (entspricht 175 Milligrammatom Mg), die 7 mMol Isoprenylaluminium enthielten, getropft. Der Ansatz wurde anschließend 60 min bei 80°C weitere vier Stunden bei 90°C gerührt. Der kugelförmige Feststoff wurde 5 mal mit insgesamt 1500 ml Benzin gewaschen.
Mg : Cl : Al = 1 : 2,03 : 0,01
$D_m/D_n$ = 1,03
$d_{50}$ = 75 μm

## Beispiel 6

300 ml einer Suspension des in Beispiel 1 hergestellten Feststoffes in Benzin 100/200 (entspricht 80 Milligrammatom Mg) wurden bei 40°C mit 25 mMol Aluminium-tri-isopropylat versetzt, das Gemisch anschließend zwei Stunden bei 95°C gerührt und die Suspension auf 50°C abgekühlt. Bei dieser Temperatur wurden innerhalb von 30 min 120 mMol Titantetrachlorid, gelöst in 20 ml Benzin, zugetropft. Der Ansatz wurde weitere 4 Stunden bei 90°C gerührt und der tiefviolette Niederschlag 5 mal mit je 200 ml Benzin gewaschen. Die kugel-

5

förmige Katalysatorkomponente A hatte einen mittleren Korndurchmesser ($d_{50}$) von 60 µm.

$$Mg : Ti : Cl : Al = 1 : 0,07 : 2,68 : 0,02$$
$$D_m/D_n = 1,1$$
$$d_{50} = 80 \text{ µm}$$

## Beispiel 7

500 ml einer Suspension des in Beispiel 2 hergestellten Feststoffes in Benzin (entspricht 200 Milligrammatom Mg) wurden bei 20°C mit 80 mMol Diethylsulfit versetzt und zwei Stunden bei 80°C gerührt.

Die dunkelgraue Suspension wurde auf 50°C abgekühlt und mit 1300 ml Benzin gewaschen. Anschließend wurden bei dieser Temperatur innerhalb von 30 min 230 mMol Titantetrachlorid zugetropft. Nachreaktion bei 95°C lieferte eine violette, kugelförmige Katalysatorkomponente A, die 5 mal mit je 200 ml Benzin in Suspension gewaschen wurde.

$$Mg : Ti : Cl : Al = 1 : 0,07 : 2,28 : 0,02$$
$$D_m/D_n = 1,1$$
$$d_{50} = 80 \text{ µm}$$

## Beispiel 8

Man verfuhr analog Beispiel 7, jedoch wurde statt des Feststoffes nach Beispiel 2 Feststoff nach Beispiel 5 eingesetzt.

$$Mg : Ti : Cl : Al = 1 : 0,11 : 2,05 : 0,02$$
$$D_m/D_n = 1,04$$
$$d_{50} = 70 \text{ µm}$$

## Beispiel 9

500 ml einer Benzin-Suspension des nach Beispiel 3 hergestellten Feststoffes (entspricht 200 Milligrammatom Mg) wurden bei 35°C mit 120 mMol Dipropylsulfit versetzt und 90 min bei 80°C gerührt. Anschließend wurde die graue Suspension bei 60°C mehrmals mit Benzin gewaschen. Bei dieser Temperatur wurde innerhalb von 30 min ein Gemisch aus 270 mMol Titantetrachlorid und 30 mMol Titan-tetraethylat, gelöst in 50 ml Benzin, zugetropft. Der Ansatz wurde 60 min bei 80°C und 120 min bei 95°C gerührt und danach der violette Niederschlag 10 mal je 200 ml Benzin gewaschen.

$$Mg : Ti : Cl : Al = 1 : 0,2 : 2,5 : 0,04$$
$$D_m/D_n = 1,2$$
$$d_{50} = 90 \text{ µm}$$

## Beispiel 10

Man verfuhr analog Beispiel 6, jedoch wurde anstelle des Feststoffes nach Beispiel 1 Feststoff nach Beispiel 4 eingesetzt.

$$Mg : Ti : Cl : Al = 1 : 0,13 : 2,35 : 0,14$$
$$D_m/D_n = 1,15$$
$$d_{50} = 70 \text{ µm}$$

## Beispiel 11

Man verfuhr analog Beispiel 7, jedoch wurden statt Diethylsulfit 60 mMol Kieselsäurediethylester eingesetzt.

$$Mg : Ti : Cl : Al = 1 : 0,08 : 2,13 : 0,02$$

## Beispiel 12

Man verfuhr analog Beispiel 11, jedoch wurde statt Titantetrachlorid ein Gemisch aus 210 mMol Dichlordiethoxytitan und 30 mMol Titantetrachlorid eingesetzt.

$$Mg : Ti : Cl : Al = 1 : 0,05 : 2,33 : 0,03$$

## Beispiel 13

Man verfuhr analog Beispiel 6, jedoch wurde der Feststoff nach Beispiel 3 und statt Aluminium-triisopropylat 40 mMol Diisobutylether eingesetzt.

Mg : Ti : Cl : Al = 1 : 0,09 : 2,46 : 0,01

## Beispiel 14

Man verfuhr analog Beispiel 6, jedoch wurde der Feststoff nach Beispiel 3 und statt Titantetrachlorid ein Gemisch aus 120 mMol Titan-tetraethylat und 30 mMol Titantetrachlorid eingesetzt.

Mg : Ti : Cl : Al = 1 : 0,19 : 2,17 : 0,08

## Beispiele 15 bis 34

Die Polymerisation von Ethylen wurde unter den in der Tabelle genannten Bedingungen in einem 1,5 l Stahlautoklaven in Gegenwart von Wasserstoff als Molekulargewichtsregler bei einer Temperatur von 85°C und einem Druck von 7 bar in 1000 ml Benzin durchgeführt. Als Komponente B wurden 4 mMol Triethylaluminium (TEA) oder 3 mMol Tri-isobutylaluminium (TIBA) zugesetzt. Die Schüttdichte des kugelförmigen Polyethylens betrug 300 bis 450 g/l, die Dichte 0,910 bis 0,985 g/ccm. D/d lag im Bereich von 1,05 bis 1,2. Der Feinanteil < 300 $\mu$m war kleiner als 0,01%. Der Resttitangehalt im Polymeren war kleiner oder gleich 4 ppm.

Kat.

| Bsp. Nr. | Komp.A n.Bsp. | Ti [mMol] | $H_2$ [bar] | Zeit [h] | Ausb. [gPE/mMolTi] | MFI(190/5) [g/10 min] | $D_m/D_n$ | $d_{50}$ [$\mu$m] |
|---|---|---|---|---|---|---|---|---|
| 15 | 6 | 0,005 | 2,5 | 2 | 21900 | 2,95 | 1,09 | 910 |
| 16 | 7 | 0,002 | 1,4 | 2 | 75800 | 0,05 | 1,04 | 1500 |
| 17 | 7 | 0,03 | 5,6 | 5 | 23100 | 220 | 1,18 | 800 |
| 18 | 8 | 0,05 | 3,85 | 1 | 19200 | 70 | 1,17 | 980 |
| 19 | 8 | 0,005 | 2,5 | 3 | 64600 | 2,3 | 1,02 | 1190 |
| 20 | 8 | 0,03 | 5,8 | 2 | 12100 | 230 | 1,03 | 790 |
| 21 | 9 | 0,003 | 2,5 | 5 | 38200 | 0,98 | 1,09 | 1150 |
| 22 | 10 | 0,004 | 2,5 | 5 | 49200 | 1,15 | 1,2 | 750 |
| 23 | 10 | 0,01 | 3,85 | 2 | 22400 | 16 | 1,2 | 810 |
| 24 | 11 | 0,05 | 3,85 | 2 | 18400 | 17 | 1,18 | 880 |
| 25 | 11 | 0,005 | 3,85 | 5 | 39500 | 19 | 1,12 | 920 |
| 26 | 11 | 0,005 | 1,4 | 5 | 68800 | 0,18 | 1,08 | 1400 |
| 27 | 12 | 0,003 | 1,4 | 2 | 30660 | 0,12 | 1,1 | 1220 |
| 28 | 12 | 0,025 | 3,85 | 2 | 20100 | 20 | 1,13 | 1100 |
| 29 | 12 | 0,01 | 3,85 | 5 | 33900 | 22 | 1,09 | 980 |
| 30 | 12 | 0,001 | 5,25 | 5 | 16300 | 170 | 1,18 | 770 |
| 31 | 13 | 0,005 | 2,5 | 2 | 23900 | 1,9 | 1,08 | 1030 |
| 32 | 13 | 0,005 | 3,85 | 5 | 39200 | 14 | 1,1 | 940 |
| 33 | 14 | 0,01 | 1,4 | 2 | 17800 | 0,05 | 1,3 | 680 |
| 34 | 14 | 0,01 | 5,8 | 3 | 11500 | 198 | 1,3 | 710 |

Beispiel 35 ·

In einem 15 l Stahlautoklaven wurden 10 l flüssiges Propylen, 20 ml Triethylaluminium, 5,3 ml p-Methylbenzoesäuremethylester und Katalysator-Komponente A (0,001 mMol Ti) nach Beispiel 7 vorgelegt. Nach Aufpressen von 0,5 bar Wasserstoff wurde 1 Stunde bei 70°C polymerisiert. Es wurden 800 g Polypropylen mit einem mittleren Durchmesser ($d_{50}$) von 550 µm erhalten. Die Schüttdichte betrug 380 g/l.

**Ansprüche**

1. Verfahren zur Herstellung eines Polyolefins durch Polymerisation von alpha-Olefinen bei einer Temperatur von 50 bis 150°C und einem Druck von 1 bis 40 bar in Gegenwart eines Katalysators bestehend aus einer Übergangsmetallkomponente (Komponente A) und einer metallorganischen Verbindung (Komponente B), dessen Komponente A entstanden ist durch Umsetzung einer magnesiumorganischen Verbindung mit einer aluminiumorganischen Verbindung, einem Elektronendonator, einer organischen Chlorverbindung und einer Übergangsmetallverbindung, dadurch gekennzeichnet, daß die Polymerisation durchgeführt wird in Gegenwart eines Katalysators, dessen Komponente A hergestellt wurde durch

    a) Umsetzung einer magnesiumorganischen Verbindung der Formel $R^1MgR^2$, worin $R^1$ und $R^2$ gleiche oder verschiedene Alkylreste mit 2 bis 12 Kohlenstoffatomen sind, mit einer aluminiumorganischen Verbindung der Formel $AlR^3_n(OR^4)_{3-n}$, worin $R^3$ und $R^4$ gleiche oder verschiedene Alkylreste mit 1 bis 8 Kohlenstoffatomen sind und n 0, 1, 2 oder 3 bedeutet, oder dem Umsetzungsprodukt von Aluminiumtrialkylen oder Aluminiumdialkylhydriden mit 4 bis 20 Kohlenstoffatome enthaltenden Diolefinen, und einem aliphatischen primären Chlorkohlenwasserstoff in einer Menge von 0,01 bis 15 Mol der aluminiumorganischen Verbindung und 0,5 bis 2,5 Mol des Chlorkohlenwasserstoffs, bezogen auf 1 Mol der magnesiumorganischen Verbindung, bei einer Temperatur von 30 bis 110°C,

    b) Behandlung des erhaltenen Feststoffs mit einem Elektronendonator in einer Menge von 0,1 bis 1 Mol pro Grammatom des im Feststoff enthaltenen Magnesiums bei einer Temperatur von 0 bis 100°C, und

    c) Umsetzung des so erhaltenen Trägermaterials mit einer Verbindung des Titans oder Zirkoniums der Formel $MeX_m(OR^5)_{4-m}$, worin Me Ti oder Zr ist, $R^5$ ein Alkylrest mit 2 bis 10 Kohlenstoffatomen ist, X ein Halogenatom ist und m eine ganze Zahl von 0 bis 4 ist, in einer Menge von 0,1 bis 2 Mol pro Grammatom des im Trägermaterial enthaltenen Magnesiums bei einer Temperatur von 30 bis 120°C.

2. Verfahren nach Anspruch 1, dadurch gekennzeichnet, daß als Elektronendonator Alkoxyaluminiumverbindungen, Dialkylsulfite, aliphatische Ether oder Kieselsäurealkylester eingesetzt werden.

3. Verfahren nach Anspruch 1, dadurch gekennzeichnet, daß eine Titanverbindung eingesetzt wurde.

**Claims**

1. A process for the preparation of a polyolefin by polymerization of alpha-olefins at a temperature from 50 to 150°C and under a pressure of 1 to 40 bar in the presence of a catalyst composed of a transition metal component (component A) and an organometallic compound (component B) in which the component A has been formed by reacting an organomagnesium compound with an organo-aluminum compound, an electron donor, an organic chlorine compound and a transition metal compound, which comprises carrying out the polymerization in the presence of a catalyst in which the component A has been prepared by

    a) reacting an organomagnesium compound of the formula $R^1MgR^2$ in which $R^1$ and $R^2$ are identical or different alkyl radicals having 2 to 12 carbon aoms with an organo-aluminum compound of the formula $AlR^3_n(OR^4)_{3-n}$ in which $R^3$ and $R^4$ are identical or different alkyl radicals having 1 to 8 carbon atoms and n denotes 0, 1, 2 or 3, or with the product from the reaction of aluminum trialkyls or aluminum dialkyl hydrides with diolefins containing 4 to 20 carbon atoms, and a primary, aliphatic chlorinated hydrocarbon in an amount of 0.01 to 15 mol of the organo-aluminum compound and 0.5 to 2.5 mol of the chlorinated hydrocarbon, relative to 1 mol of the organomagnesium compound, at a temperature from 30 to 110°C,

    b) treating the resulting solid with an electron donor in an amount of 0.1 to 1 mol per gram atom of the magnesium present in the solid, at a temperature from 0 to 100°C, and

    c) reacting the supporting material thus obtained with a compound of titanium or zirconium of the formula $MeX_m(OR^5)_{4-m}$ in which Me is Ti or Zr, $R^5$ is an alkyl radical having 2 to 10 carbon atoms, X is a halogen atom and m is an integer from 0 to 4, in an amount of 0.1 to 2 mol per gram atom of the magnesium present in the supporting material, and at a temperature from 30 to 120°C.

2. The process as claimed in claim 1, wherein alkoxyaluminum compounds, dialkyl sulfites, aliphatic ethers or alkyl silicates are employed as the electron donor.

3. The process as claimed in claim 1, wherein a titanium compound has been used.

**Revendications**

1. Procédé pour préparer une polyoléfine par polymérisation d'α-oléfines à une température de 50 à 150°C et sous une pression de 1 à 40 bar, en présence d'un catalyseur constitué d'une composante à base d'un métal de transition (composante A) et d'un composé organo-métallique (composante B) dont la composante A a été formée par réaction d'un composé organo-magnésien avec un composé organo-aluminique, un donneur d'électrons, un composé organique chloré et un composé d'un métal de transition, procédé caractérisé en ce que la polymérisation est effectuée présence d'un catalyseur dont la composante A a été préparée par :

a) réaction d'un composé organo-magnésien de formule

$$R^1MgR^2$$

dans laquelle $R^1$ et $R^2$ représentent des radicaux alkyles, identiques ou différents, contenant de 2 à 12 atomes de carbone, avec un composé organo-aluminique répondant à la formule :

$$AlR^3_n(OR^4)_{3-n}$$

dans laquelle $R^3$ et $R^4$ représentent des radicaux alkyles, identiques ou différents, contenant de 1 à 8 atomes de carbone et n est égal à 0, à 1, à 2 ou à 3, ou un produit résultant de la réaction de trialkyl-aluminiums ou d'hydrures de dialkyl-aluminiums avec des dioléfines contenant de 4 à 20 atomes de carbone, et un hydrocarbure chloré aliphatique primaire, en une quantité de 0,01 à 15 mol du composé organo-aluminique et de 0,5 à 2,5 mol de l'hydrocarbure chloré pour 1 mol du composé organo-magnésien, à une température de 30 à 110°C,

b) traitement de la matière solide obtenue par un donneur d'électrons en une quantité de 0,1 à 1 mol par atome-gramme du magnésium contenu dans la matière solide, à une température de 0 à 100°C, et

c) réaction de la matière support ainsi obtenue avec un composé du titane ou du zirconium répondant à la formule :

$$MeX_m(OR^5)_{4-m}$$

dans laquelle Me représente Ti ou Zr, $R^3$ représente un radical alkyle contenant de 2 à 10 atomes de carbone, X représente un atome d'halogène et m désigne un nombre entier de 0 à 4, en une quantité de 0,1 à 2 mol par atome-gramme du magnésium contenu dans la matière support, à une température de 30 à 120°C.

2. Procédé selon la revendication 1 caractérisé en ce qu'on utilise, comme donneurs d'électrons, des alcoxy-aluminiums, des sulfites de dialkyles, des éthers aliphatiques ou des silicates d'alkyles.

3. Procédé selon la revendication 1 caractérisé en ce qu'on utilise un composé du titane.